# EUROPEAN PATENT SPECIFICATION

(11) **EP 3 141 101 B1**
(45) Date of publication and mention of the grant of the patent: **16.05.2018**
(21) Application number: 16187834.3
(22) Date of filing: 08.09.2016
(51) Int. Cl.: A01D 34/82

(54) **APPARATUS FOR ADJUSTING THE HEIGHT OF A LAWNMOWER HANDLE AND TILTING IT**
VORRICHTUNG ZUR VERSTELLUNG DER HÖHE EINES RASENMÄHERGRIFFS UND ZUR NEIGUNG DAVON
APPAREIL PERMETTANT DE RÉGLER LA HAUTEUR D'UNE POIGNÉE DE TONDEUSE À GAZON ET DE LA BASCULER

(30) Priority: 11.09.2015 IT UB20153551
(43) Date of publication of application: 15.03.2017
(73) Proprietor: Stiga S.p.A. in breve anche St. S.p.A., 31033 Castelfranco Veneto (TV) (IT)
(72) Inventor: BACCHIN, Gian Luca, 31033 CASTELFRANCO VENETO (TV) (IT); BASTASIN, Franco, 31100 TREVISO (IT); D'AGOSTINI, Mauro, 35018 SAN MARTINO DI LUPARI (PD) (IT)
(74) Representative: Mittler, Andrea

(56) References cited:
- EP-A1- 2 777 377
- WO-A1-2005/122745
- WO-A1-2015/114003
- DE-U1-202013 005 119
- GB-A- 2 026 928

## Description

The present invention relates to an apparatus for adjusting the height of a lawnmower handle and tilting it.

In the prior art, EP-2777377-A1 describes a handle of a lawnmower comprising two longitudinal arms, the lower ends of which are pivoted with a frame of the lawnmower by means of pivots. Each arm of the lawnmower comprises a transversal through hole for the pivot to pass. The lower end of the arm has a cavity which acts as a guide for a tooth. Said tooth is slidably mounted with the cavity of the arm. The arm is connected to the frame with a spring. The tooth is kept in a position by means of a spring contained in the cavity of the arm and is mounted therewith. The tooth passes from an engaged position to a disengaged position with a multiplicity of seats which are integral with the frame. An adjustment control is mounted on an upper portion of the handle. The adjustment control comprises a system of levers which allow to pull or release a wire hooked with the frame hooking spring. The lever system allows the spring to pass from a working position, in which the tooth is in one of the seats, to a resting position, so that the tooth can come out of one of the seats and pass to another seat. One end of the arm is rotatably connected to the frame by means of a pivot. The lever system allows the tooth to be engaged with one of the seats of the frame, to be disengaged and to pass from one seat to the other. Disadvantageously, during the disengaging position, the handle may also tilt completely without there being any security mechanism for avoiding the tooth to come out and the handle to tilt. Disadvantageously, the engaging tooth may break during the grass cutting operations because it is subject to significant stresses and vibrations, so much so as to make the use of said handle dangerous.

In the prior art, WO-2005/122745-A1 describes a handle of a lawnmower which comprises two longitudinal arms, the lower ends of which are pivoted with a frame of the lawnmower by means of two pivots. Each arm of the lawnmower comprises a transversal through opening for the pivot to pass. Said transversal through opening mounts a damper element. The lower end of the arm comprises a multiplicity of seats. The through opening limits the movement of the pivot and allows the arm to slide to a tilting position when a greater force is exerted to overcome the resistance of the damper element. At least one of the seats of the arm passes from an engaged position to a disengaged position with a spring which is integral with the frame. The damper element disadvantageously is unsafe because it may be engaged unintentionally also during normal operations of use when the operator pushes on the handle, thus causing the handle to dangerously tilt out of its seat. There is no security mechanism, but only a damper mechanism which can be dangerously unintentionally engaged. The damper mechanism is not very solid and is easy to be broken, moreover vibrations and stresses may break the two pivots in use when cutting the grass.

It is the object of the present invention to make a handle of a lawnmower which can be adjusted in height and tilted more safely, quickly and simply, thus avoiding the handle from tilting unintentionally during normal grass cutting operations, which handle is easier to be used, is more solid and long-lasting.

According to the invention, such an object is achieved by a lawnmower comprising a handle, a frame and an apparatus for adjusting the height of a lawnmower handle and tilting it according to claim 1.

These and other features of the present invention will become more apparent from the following detailed description of a practical embodiment thereof, shown by way of non-limitative example in the accompanying drawings, in which:
Figure 1 shows a top view of a lawnmower;

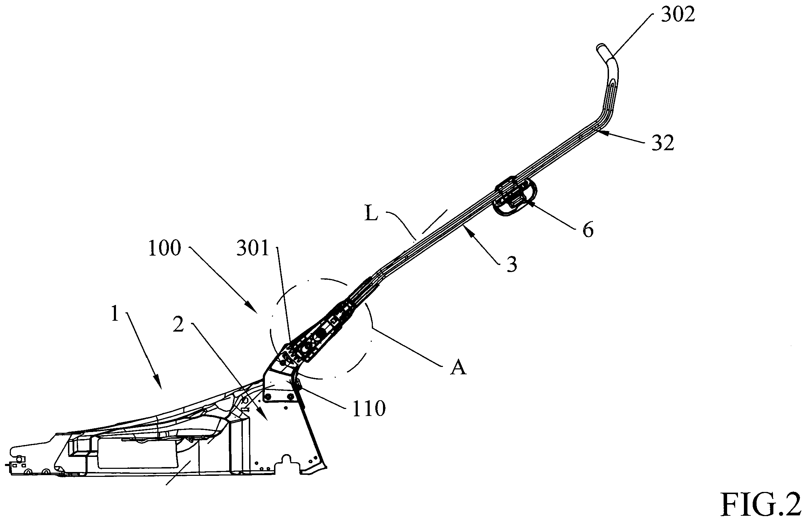

Figure 2 shows a sectional view according to line II-II in Figure 1;
Figure 3 shows an enlargement A in Figure 2 with cover and with a handle in a position of a first height;
Figure 4 shows the view in Figure 3, uncovered;
Figure 5 shows the enlargement A in Figure 2, with cover and with the handle in a position of a second height;
Figure 6 shows the view in Figure 5, uncovered;
Figure 7 shows the enlargement A in Figure 2, with cover and with the handle in a position of a third height;
Figure 8 shows the view in Figure 7, uncovered;
Figure 9 shows the enlargement A in Figure 2, with cover and with the handle with springs in compressed position;
Figure 10 shows the view in Figure 9, uncovered;
Figure 11 shows a side view of the lawnmower with the handle in position tilting over the front;
Figure 12 shows an enlargement B of Figure 11, with cover;
Figure 13 shows the view in Figure 12, uncovered;
Figure 14 shows a side view of a slide of an apparatus for lifting and tilting the handle;
Figure 15 shows a top view of the slide in Figure 14;
Figure 16 shows a sectional view according to line II-II in Figure 1, of a bracket of a frame of the lawnmower;
Figure 17 shows a side view of the cover;
Figure 18 shows a front view of the handle;
Figure 19 shows an uncovered view of a control of an adjustment comprising a cursor;
Figure 20 shows a front view of the manageable knob which can be mounted with said cursor;
Figure 21 shows a side view of the manageable knob;
Figure 22 shows an uncovered view of the adjustment control during the phase of adjusting the height of the handle;
Figure 23 shows the uncovered view in Figure 22 during a phase of tilting the handle.

With reference to the figures listed above, a lawnmower 1 is worth noting, comprising a handle 32, a frame 2 and an apparatus 100 for adjusting the height of the handle 32 of lawnmower 1 and tilting it.

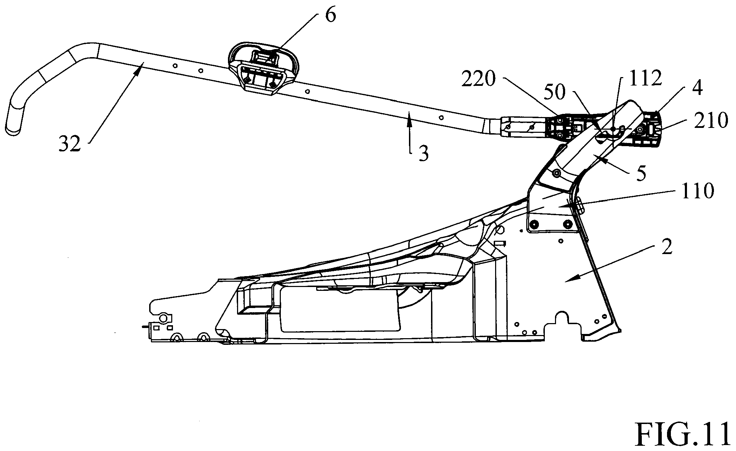

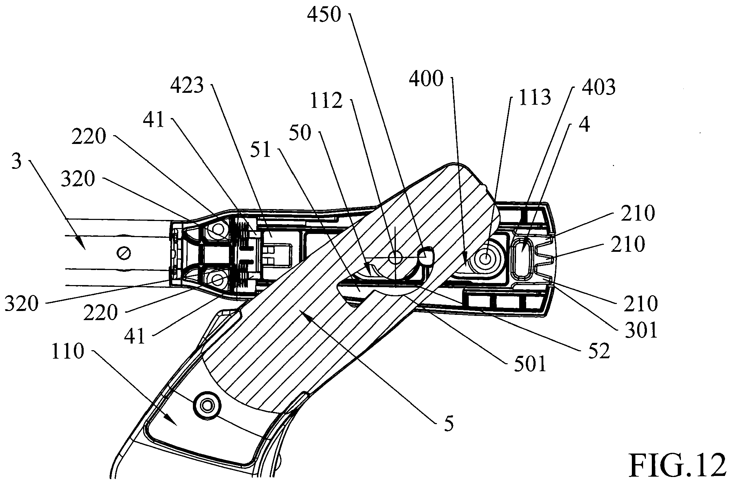

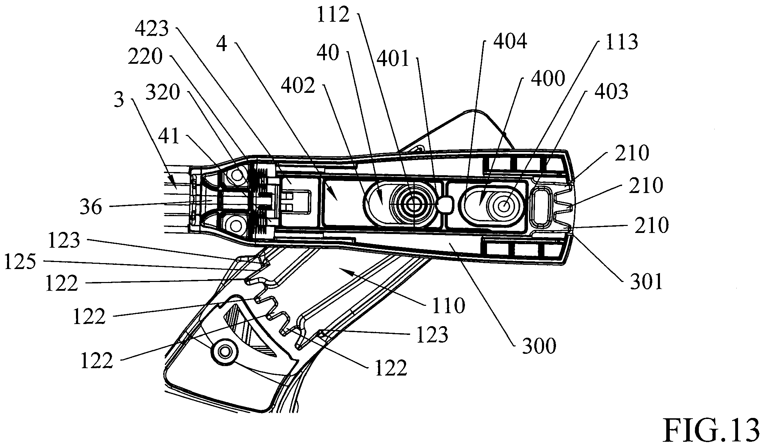

Said apparatus 100 is adapted to allow the height of handle 32 to be adjusted with respect to frame 2 and is adapted to allow handle 32 to be tilted towards a front of lawnmower 1, as shown in Figures 11 to 13.

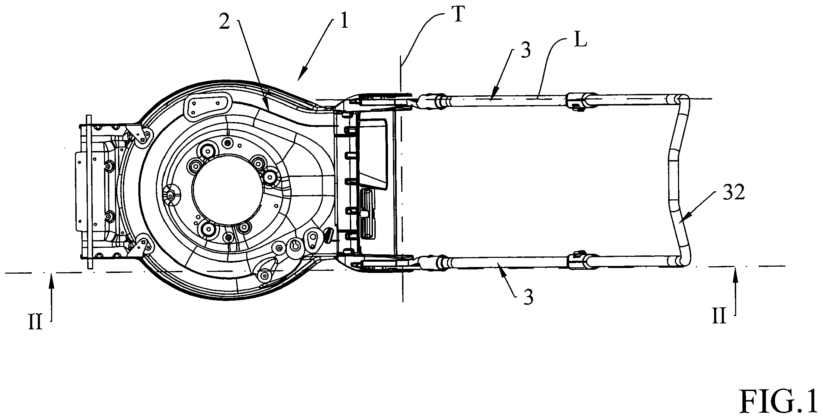

With particular reference to Figure 1, said handle 32 of lawnmower 1 comprises at least one longitudinal arm 3. In the practical embodiment indicated in the figures, said lawnmower 1 comprises two longitudinal arms 3.

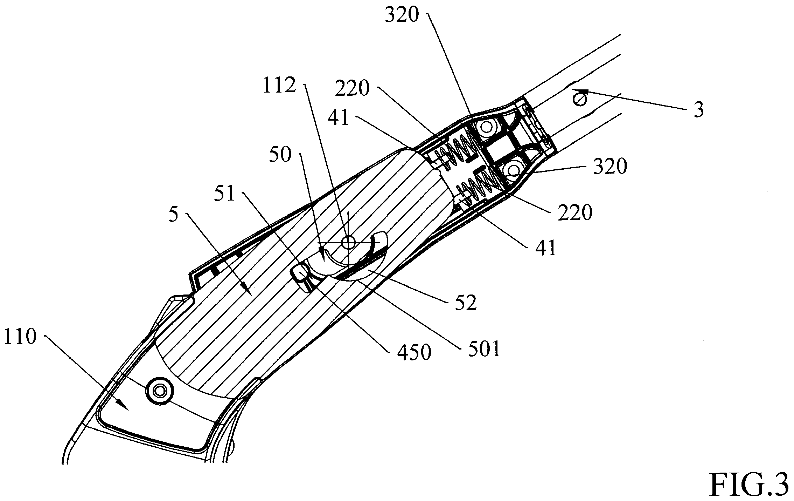

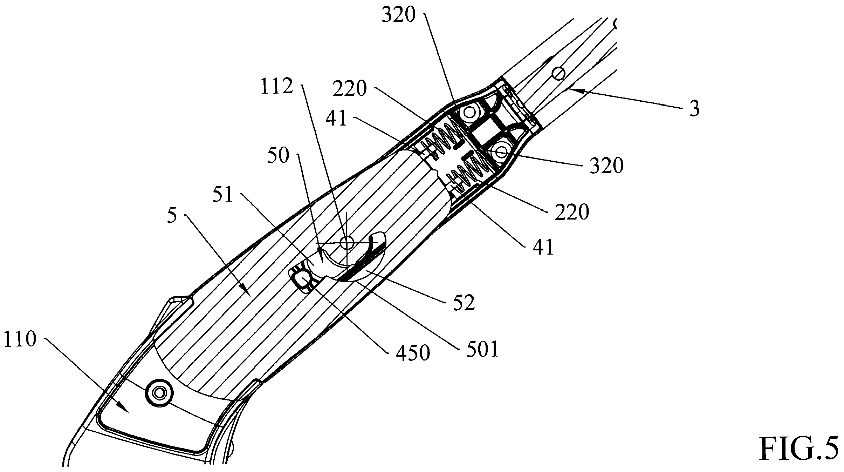

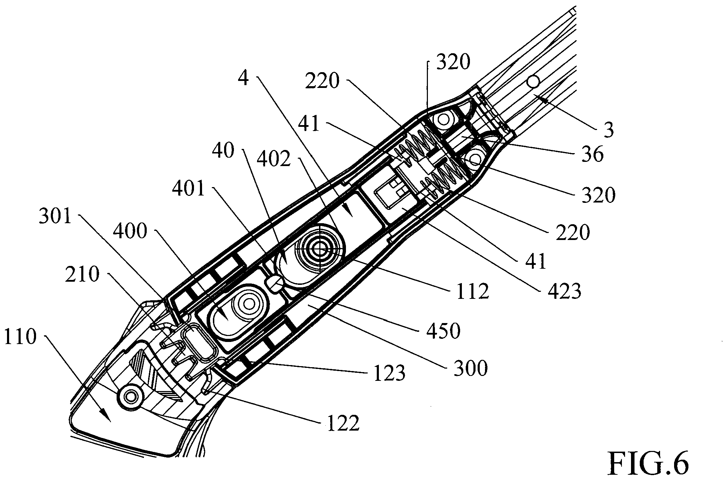

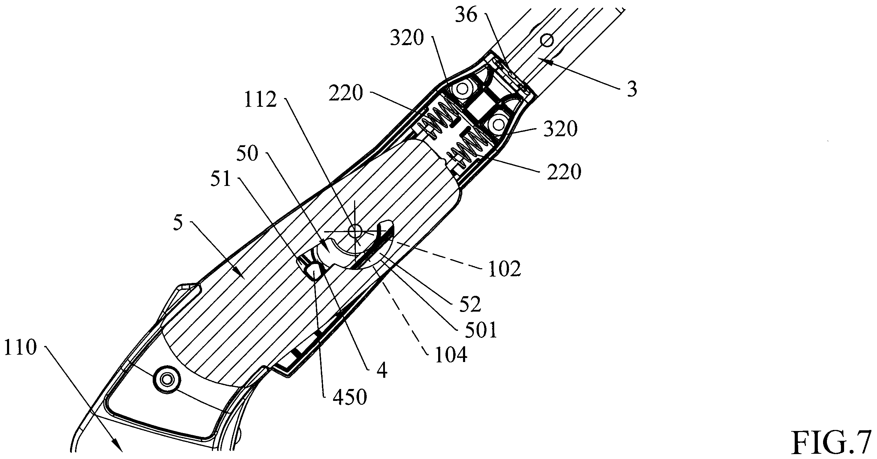

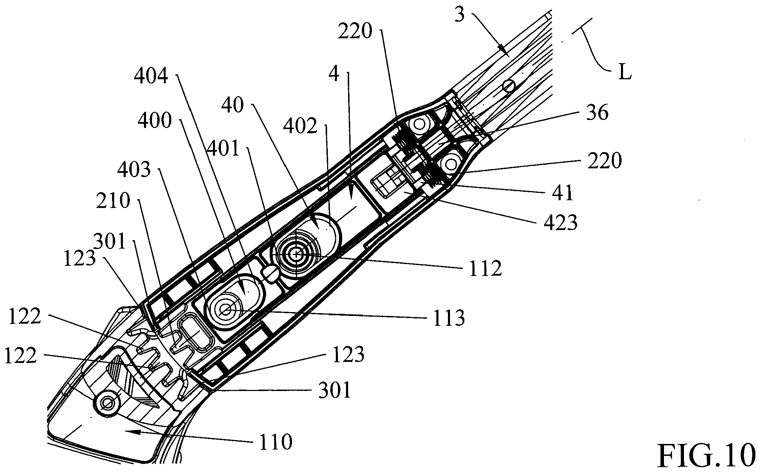

Each longitudinal arm 3 of said two longitudinal arms 3 is rotatably pivoted to said frame 2 by means of a pivot 112, as shown in Figures 3 to 13.

Said longitudinal arm 3 identifies a longitudinal axis L. Said longitudinal arm 3 comprises a transversal through hole 102, which is adapted to cause said pivot 112 to pass transversely through the longitudinal arm 3. Said pivot 112 identifies a transverse axis T.

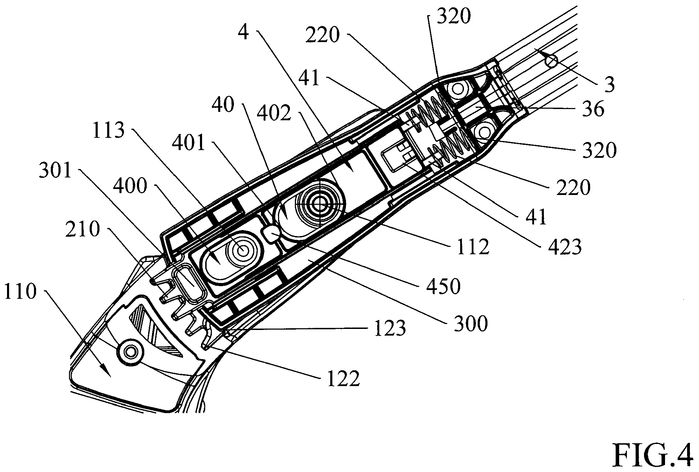

As shown in particular in Figures 4, 6, 8, 10, 13, said apparatus 100 for adjusting the height of handle 32 and tilting it comprises a guide cavity 300 arranged along the longitudinal axis L and integrally mounted with a lower end 301 of the longitudinal arm 3, a slide 4 which is slidably mounted along the longitudinal axis L with said guide cavity 300, a bracket 110 which is integrally mounted with said frame 2 and an adjustment control 6 mounted firmly and integrally with handle 32.

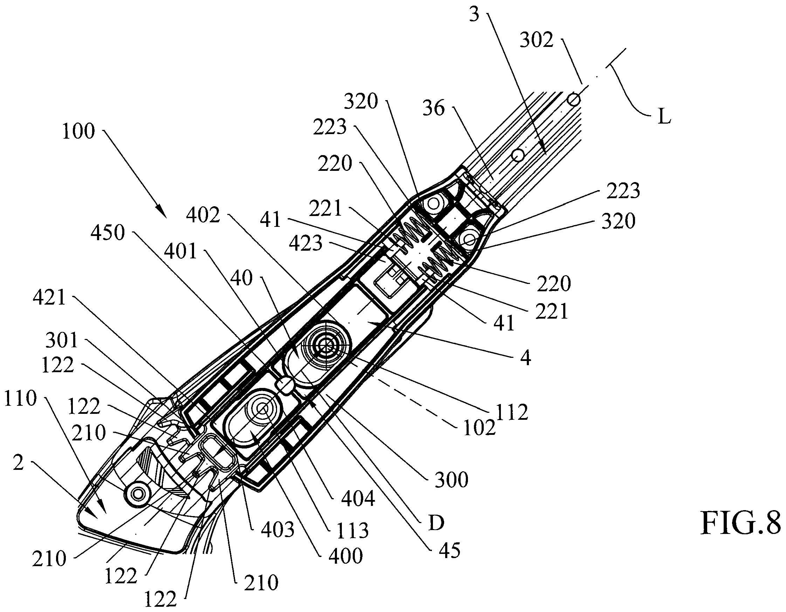

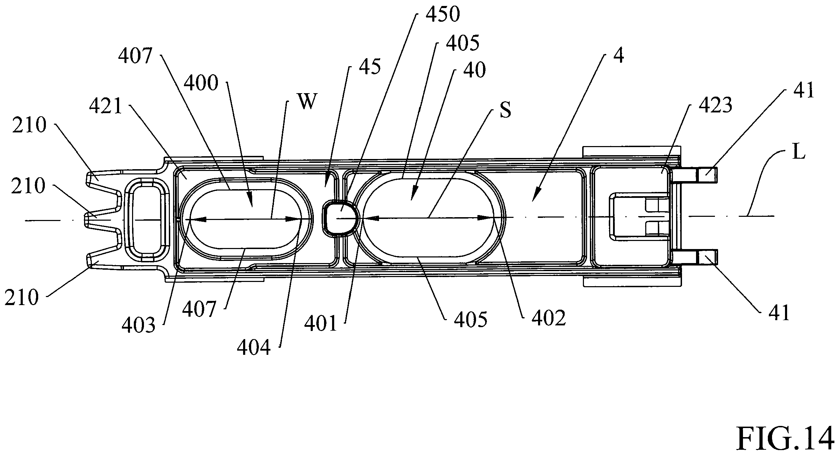

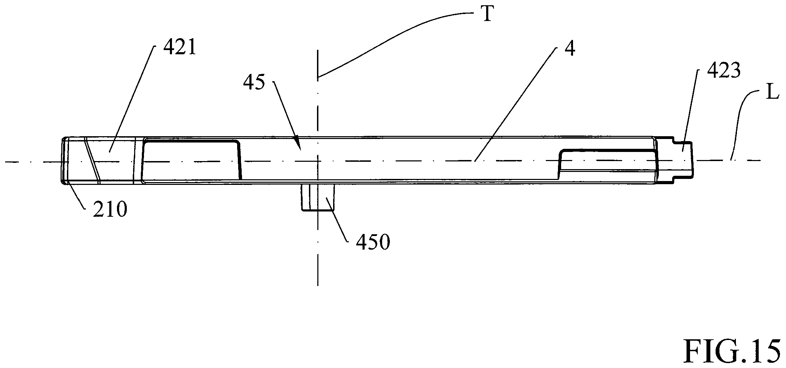

As shown in particular in Figures 14 and 15, said slide 4 of apparatus 100 comprises a lower portion 421 along the longitudinal axis L in direction of frame 2, said lower portion 421 of slide 4 comprises at least one tooth 210. In the practical embodiment, said lower portion 421 of slide 4 is expected to comprise a multiplicity of teeth 210, e.g. three teeth, to make the connection more stable between the slide 4 and bracket 110. Said slide 4 includes an upper portion 423 along the longitudinal axis L in direction of an upper end 302 of the longitudinal arm 3, said upper portion 423 of slide 4 mounts at least one spring 220 for a lower end 221 of spring 220. In the embodiment in the figures, said upper portion 423 of slide 4 mounts two springs 220, but spring 220 may be only one, as shown in particular in Figure 8.

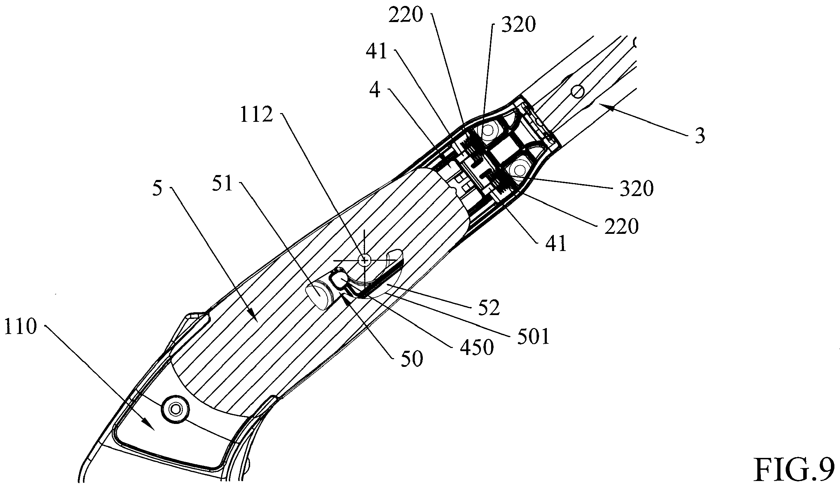

As shown in particular in Figures 4, 6, 8, 10, 13, said guide cavity 300 narrows into at least one upwards step retainer 320 in the direction of the upper end 302 of the longitudinal arm 3, said step retainer 320 of the guide cavity 300 mounts said at least one spring 220 for an upper end 223 of spring 220. Said at least one spring 220 is therefore mounted with said guide cavity 300 by the upper end 223 of spring 220 itself. Said at least one spring 220 is adapted to pass from a stretched position, in which it pushes slide 4 in direction of frame 2 (Figures 3 to 8) to a compressed position, in which slide 4 compresses said at least one spring 220 between the upper portion 423 of slide 4 and said step retainer 320 of the guide cavity 300 (Figures 9 to 10).

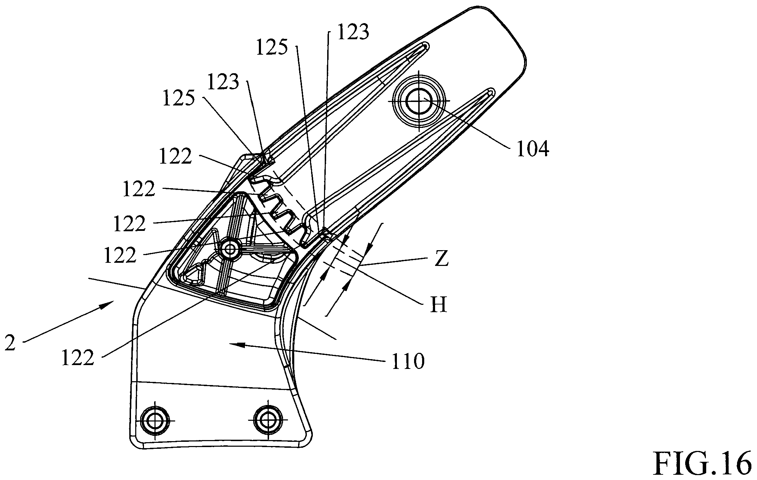

As shown in particular in Figure 16, said bracket 110 comprises a multiplicity of seats 122 with a complementary shape with respect to said at least one tooth 210 of slide 4. Each seat 122 of said multiplicity of seats 122 is adapted to engage said at least one tooth 210 in said stretched position of said at least one spring 220 when said at least one tooth 210 of slide 4 goes into its own seat 122 of said multiplicity of seats 122 of bracket 110. Said multiplicity of seats 122 of bracket 110 is facing along the longitudinal axis L and in the direction of said at least one tooth 210 of slide 4.

Said bracket 110 comprises the transversal through hole 104 at the transversal through hole 102 of the longitudinal arm 3, where said transversal through hole 104 of bracket 110 rotatably mounts said pivot 112 so as to pivot said longitudinal arm 3 with said bracket 110 of frame 2.

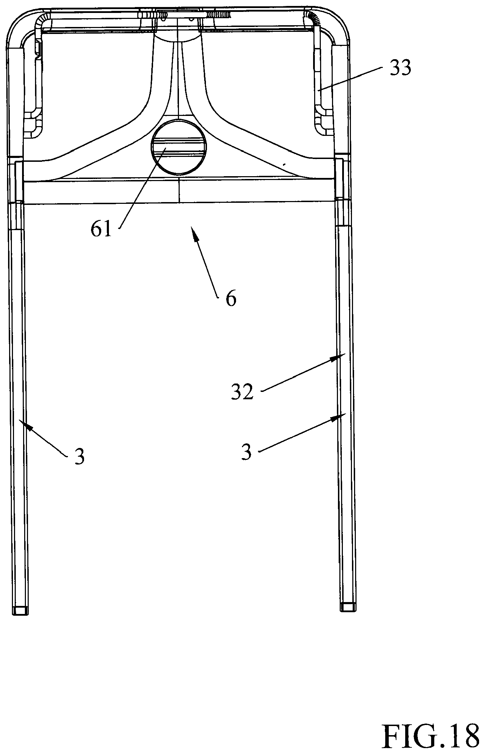

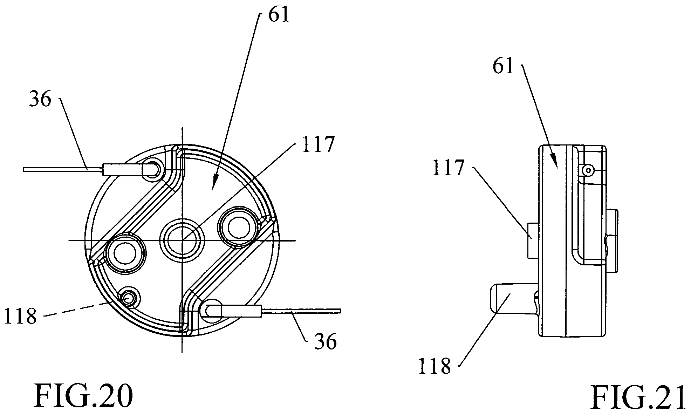

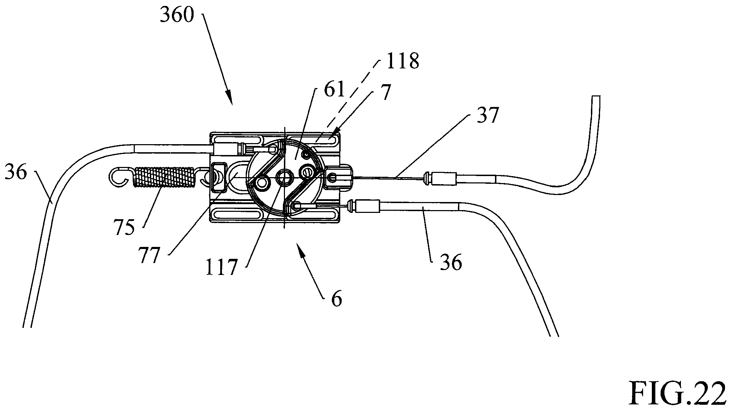

As shown in particular in Figures 18 to 23, said apparatus 100 comprises said adjustment control 6, which comprises a lever system 360 comprising at least one cable 36 which is adapted to pull said slide 4 up to compress said at least one spring 220 in the compressed position.

As shown in particular in Figure 16, said bracket 110 comprises two step retainers 123, which are arranged externally to the multiplicity of seats 122. A depth H of each seat 122 is smaller than a second depth Z of each step retainer 123, so that during the compression of said at least one spring 220, during a phase of adjusting the height of handle 32, said at least one tooth 210 advantageously is constrained by inner walls 125 of said two step retainers 123 so as to avoid handle 32 from unintentionally passing to the tilting position. There is a need to compress spring 220 into a position of higher compression to overcome a difference in height of the second depth Z of each step retainer, thus making lawnmower 1 safer, as shown in Figures 11 to 13.

As shown in particular in Figure 8, said transversal through hole 102 of the longitudinal arm 3 is arranged at a longitudinal distance D measured along the longitudinal axis L starting from the lower end 301 of the longitudinal arm 2 close to frame 2 and continuing towards the upper end 302 of the longitudinal arm 3.

As shown in particular in Figures 8 and 14, said slide 4 comprises a median portion 45 comprising a through opening 40. Said through opening 40 is at the transversal through hole 102 of the longitudinal arm 3 and of the transversal through hole 104 of bracket 110. Said pivot 112 passes through the transversal through hole 102 of the longitudinal arm 3 and through said through opening 40 of slide 4, thus constraining the movement of slide 4. Said through opening 40 of slide 4 has a longitudinal dimension S arranged along the longitudinal axis L. Said longitudinal dimension S of the through opening 40 of slide 4 is between a lower transverse stop wall 401 and an upper transverse stop wall 402 of the through opening 40 of slide 4.

Constraints of the movement of slide 4with respect to pivot 112 are identified by the transverse walls, a lower transverse stop wall 401 and an upper transverse stop wall 402 of the through opening 40 of slide 4. The position of pivot 112 and of the through hole 102 of the longitudinal arm 3, which is no longer in the lower portion of the longitudinal arm 3 as in the prior art, but is at a longitudinal distance D, makes lawnmower 1 more stable and safer, thus allowing vibrations and knocks due to objects or detachments from the ground to be better addressed.

Said slide 4 also comprises a second through opening 400. Said second through opening 400 is obtained in the lower portion 421 slide 4, between said at least one tooth 210 and said through hole 40 of slide 4. Said slide 4 comprises at least one protuberance 41 of said slide 4, each of said at least one protuberance 41 mounting said at least one spring 220. Said protuberance 41 of slide 4 is arranged along the longitudinal axis L.

Said second through opening 400 is adapted to advantageously act as a slide for a transverse protuberance 113 of the longitudinal arm 3, which acts as a guide for slide 4. Said longitudinal arm 3 comprises said transverse protuberance 113, which is arranged along the transverse axis T, said transverse protuberance 113 advantageously is integral with said longitudinal arm 3, thus making the connection between longitudinal arm 3 and bracket 110 more solid and secure. Said second through opening 400 of slide 4 has a second longitudinal dimension W arranged along the longitudinal axis L. Said second longitudinal dimension W of the second through opening 400 of slide 4 is between a second lower transverse stop wall 403 and a second upper transverse stop wall 404 of the second through opening 400 of slide 4.

Said second through opening 400 advantageously causes slide 4 to slide straight along the longitudinal axis L, since pivot 112 slides constrained by lateral transverse walls 405 of the through opening 40 of slide 4 and between a lower transverse stop wall 401 and an upper transverse stop wall 402 of the through opening 40 of slide 4 and the transverse protuberance 113 of the longitudinal arm 3 allows slide 4 to slide being constrained by second lateral transverse walls 407 of the second through opening 400 of slide 4 and between a second lower transverse stop wall 403 and a second upper transverse stop wall 404 of the second through opening 400 of slide 4.

Said slide 4 advantageously comprises a security pin 450 arranged between the through opening 40 and the second through opening 400, said security pin 450 extends outwardly in the direction of the transverse axis T.

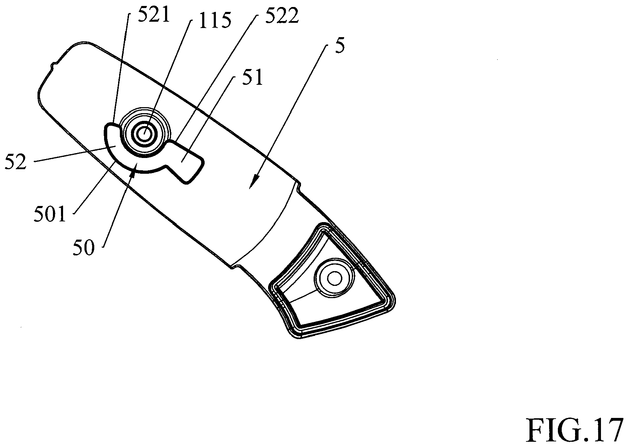

As shown in particular in Figures 3, 5, 7, 9, 11, 12, 17, said bracket 110 comprises a cover 5 which closes the guide cavity 300. Said cover 5 of bracket 110 comprises a third transversal through hole 115 adapted to rotatably pivot pivot 112. Said cover 5 comprises a guide opening 50 adapted to act as a guide for the security pin 450 of slide 4, thus making lawnmower 1 safer. The shape of the guide opening 50 of cover 5 follows the movement of the security pin 450 which moves jointly and integrally with slide 4. The security pin 450, which slides inside transverse walls 501 of the guide opening 50 of cover 5, makes the movement of slide 4 more stable and strengthens the structure of apparatus 100. Said guide opening 50 of cover 5 comprises a first portion of through opening 51 which constrains the movement of the security pin 450 when the height of handle 32 is adjusted by means of apparatus 100, thus not allowing said handle 32 to tilt towards a front of lawnmower 1. Said guide opening 50 of cover 5 also comprises a second portion of through opening 52 of circumference arch shape, which constrains the movement of the security pin 450 when slide 4 is disengaged from bracket 110, and handle 32 may rotate about pivot 112 up to tilt handle 32 over the front of lawnmower 1. Said first portion of through opening 51 is connected to said second portion of through opening 52 to form the guide opening 50 of cover 5. Said second portion of through opening 52 of the guide opening 50 constrains the movement of handle 32 about pivot 112 between a first transverse stop wall 521 and a second transverse stop wall 522 of the second portion of through opening 52 of the guide opening 50, as shown in Figure 17.

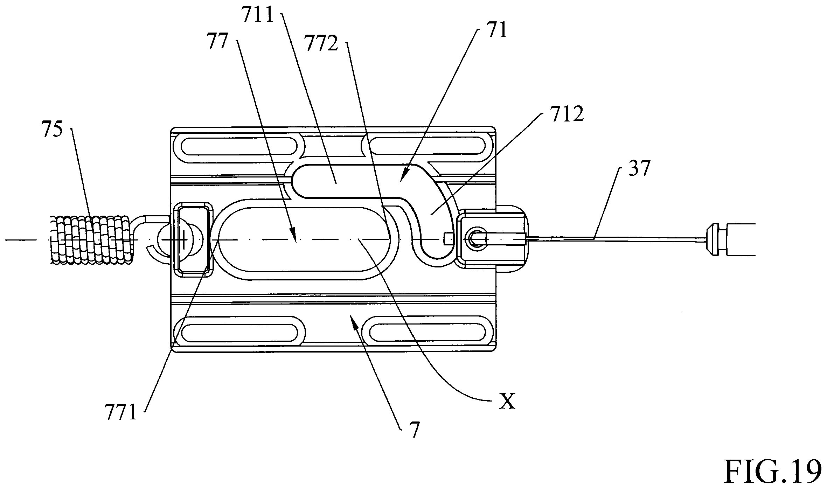

As shown in particular in Figures 19 to 23, said adjustment control 6 comprises a cursor 7, a first through opening 71 of said cursor 7, a second through opening 77 of said cursor 7, a manageable knob 61 rotatably pivoted with said handle 32 by means of a second pivot 117.

Said manageable knob 61 is connected to said at least one cable 36.

Said manageable knob 61 is adapted to slide constrained in said second through opening 77.

Said adjustment control 6 also comprises a second spring 75 which is adapted to pass from at least a stretched position to at least a compressed position.

Said cursor 7 comprises a long side which extends along a first axis X, said second through opening 77 has a long dimension which extends along the first axis X.

Said first through opening 71 comprises a first portion 711 which has a long dimension which extends along the first axis X and a second portion 712 which has a circumference arch shape.

Said manageable knob 61 comprises a pin 118. Said pin 118 is constrained to the second portion 712 of the first through opening 71 during the phase of adjusting the height of handle 32 and during the phase of tilting handle 32.

Said pin 118 is constrained to the first portion 711 of the first through opening 71 to keep handle 32 in position during the working operations.

Said second spring 75 is fixed by one end to handle 32 and by a second end to said cursor 7.

During the phase of adjusting the height of handle 32 and during the phase of tilting handle 32, said second spring 75 is kept in compressed position and said manageable knob 61 is adapted to rotate about the second pivot 117 by pulling or releasing said at least one cable 36, while pin 118 is constrained by the second portion 712 of the first through opening 71, while rotating said manageable knob 61 causes said at least one spring 220 to pass from said at least one stretched position to said at least one compressed position during the phase of adjusting the height of handle 32 and during the phase of tilting handle 32.

During a phase of keeping handle 32 in position, said second spring 75 passes from said at least one stretched position pulled by a second cable 37 of the lever system 360, the cursor 7 slides constrained by the second pivot 117 and the manageable knob 61 does not rotate on the second pivot 117.

During the phase of keeping handle 32 in working position, a safety lever 33 pivoted on handle 32 is in working position so that lawnmower 1 may work. When the safety lever 33 is in the resting position, the height may be adjusted of handle 32 or handle 32 may be tilted forwards.

Said adjustment control 6 advantageously makes lawnmower 1 safer by avoiding handle 32 from unintentionally tilting.

Moreover, said adjustment control 6 advantageously comprises a security mechanism which removes an operation consent to a motor during the phase of tilting handle 32 when the second spring 75 pulls the sliding plate 71 towards itself. Said security mechanism may be a lever system connected to the ignition of the motor which disconnects the power supply of the motor, or may be a button which controls the ignition of the motor or refuses the operation consent to the motor.

With regard to the operation of lawnmower 1 comprising handle 32, frame 2 and the apparatus 100 for adjusting the height of the handle 32 of lawnmower 1 and tilting it, the phase of adjusting the height of handle 32 is separated from the phase of tilting handle 32.

When said at least one spring 220 is in stretched position and pushes said slide 4 towards bracket 110, pivot 112 contrasts the upper transverse stop wall 402, thus stopping the travel of slide 4 in the guide cavity 300. Said transverse protuberance 113 of the longitudinal arm 3 contrasts the second upper transverse stop wall 404, thus stopping the travel of slide 4 in the guide cavity 300. The security pin 450 remains constrained in the first portion 51 of the guide opening 50 of cover 5.

In the phase of adjusting the height of handle 32, when said at least one spring 220 is in compressed position and said at least one cable 36 pulls slide 4 upwards, thus disengaging said slide 4 from bracket 110 by the depth H of the seats 122 and thus allowing the height of handle 32 to be adjusted, said at least one tooth 210 remains confined within the inner walls 125 of the two retainer steps of bracket 110.

In the phase of adjusting the height of handle 32, the manageable knob 61 has pivot 117 in contact with the second stop wall 772 of the second through opening 77 of cursor 7 and said manageable knob 61 is capable of rotating about said pivot 117, thus causing pin 118 to slide along the circumference arch identified by the second portion 712 of the first through opening 71 of cursor 7. The manageable knob 61 is rotated by the operator to pull said at least one cable 36 so that said at least one cable 36 pulls slide 4, up to compress said at least one spring 220 to cause said at least one tooth 210 to come out of its own seat 122 by depth H.

In the phase of tilting handle 32, when said at least one spring 220 is in position of higher compression, said manageable knob 61 further pulls said at least one cable 36 and disengages said at least one tooth 210 of slide 4 out of the second depth Z of the two step retainers of bracket 110, thus allowing the longitudinal arm 3 to rotate about pivot 112 up to tilt handle 32 over the front of lawnmower 1. In said position of higher compression of said at least one spring 220 during a phase of tilting handle 32, said at least one tooth 210 is disengaged from said two step retainers 123, thus allowing said longitudinal arm 3 to rotate about pivot 112. In said position of higher compression of said at least one spring 220, pivot 112 contrasts the lower transverse stop wall 401, thus stopping the travel of slide 4 in the guide cavity 300, said transverse protuberance 113 contrasts the second lower transverse stop wall 403, thus stopping the travel of slide 4 in the guide cavity 300. The security pin 450 passes from the first portion 51 of the guide opening 50 of cover 5 up to the second portion 52 of the guide opening 50 of cover 5. Said security pin 450 is constrained between the first transverse stop wall 521 and the second transverse stop wall 522 of the second portion of through opening 52 of the guide opening 50.

Alternatively, the lawnmower may also be expected to comprise a handle 32 with only one longitudinal arm 3.

Alternatively, said bracket 2 is expected to comprise said at least one tooth 210 and slide 4 is expected to comprise said multiplicity of seats 122.

Alternatively, said second through opening 400 of slide 4 may be expected to be made in the upper portion of slide 4 between said through opening 40 of slide 4 and said at least one protuberance 41 of said slide 4.

Alternatively again, when said at least one spring 220 is in stretched position and pushes said slide 4 towards bracket 110, pivot 112 is expected not to contrast the upper transverse stop wall 402, since said at least one tooth 210 already contrasts the seats 122 of bracket 110, thus stopping the travel of slide 4 in the guide cavity 300. Said transverse protuberance 113 of the longitudinal arm 3 may also not contrast the second upper transverse stop wall 404.

Advantageously, said lawnmower 1 comprising handle 32, frame 2 and the apparatus 100 for adjusting the height of the handle 32 of lawnmower 1 and tilting it allows to adjust the height of handle 32 and tilt it more safely, quickly and simply, thus avoiding handle 32 from tilting unintentionally during normal grass cutting operations and during normal operations of adjusting the height of handle 32, so that handle 32 is easier to be used, is more solid and long-lasting.

## Claims

1. Lawnmower (1) comprising a handle (32), a frame (2) and an apparatus for adjusting the height and tilting (100) the handle (32) of the lawnmower (1), said apparatus (100) is adapted to adjust the height of said handle (32) and is adapted to tilt said handle (32) toward a front of the lawnmower (1), said handle (32) of the lawnmower (1) comprising at least one longitudinal arm (3), said longitudinal arm (3) is rotatably pivoted to said frame (2) by means of a pivot (112), said longitudinal arm (3) identifies a longitudinal axis (L), said longitudinal arm (3) comprises a transversal through hole (102) which is adapted to pass transversely said pivot (112) through the longitudinal arm (3), said pivot (112) identifies a transverse axis (T), said apparatus to adjust the height and to tilt (100) the handle (32) comprises a guide cavity (300) disposed along the longitudinal axis (L) and integrally mounted with a lower end (301) of the longitudinal arm (3), a slide (4) which is slidably mounted along the longitudinal axis (L) with said guide cavity (300), a bracket (110) which is integrally mounted with said frame (2) and with an adjustment control (6), said slide (4) of the apparatus (100) comprises a lower portion (421) along the longitudinal axis (L) towards the frame (2), said lower portion (421) of the slide (4) comprising at least one tooth (210), said slide (4) provides an upper portion (423) along the longitudinal axis (L) towards an upper end (302) of the longitudinal arm (3), said upper portion (423) of the slide (4) mounts at least one spring (220), said at least one spring (220) mounted with said guide cavity (300), said at least one spring (220) is adapted to pass from at least one stretched position wherein the spring pushes the slide (4) towards the frame (2) to at least one compression position wherein the slide (4) compresses said at least one spring (220), said bracket (110) comprises a multiplicity of seats (122), each seat (122) of said multiplicity of seats (122) is adapted to engage said at least one tooth (210) in said stretched position of said at least one spring (220), said apparatus (100) comprises said adjustment control (6) which comprises a lever system (360) comprising at least one cable (36) which is adapted to pull said slide (4) up to compress said at least one spring (220) in said at least one compression position,
**characterized in that**
- said lever system (360) is adapted to pull said at least one cable (36) to pass said at least one spring (220) to a position of higher compression,
- said bracket (110) comprises two step retainers (123) which are arranged externally to the multiplicity of seats (122), a depth (H) of each seat (122) is smaller than a second depth (Z) of each step retainer (123), in said at least one compression position of said at least one spring (220) during a phase of adjusting the height of the handle (32), said at least one tooth (210) is constrained by said two step retainers (123), in said position of higher compression of said at least one spring (220) during a phase of tilting the handle (32), said at least one tooth (210) is disengaged from said two step retainers (123) allowing said longitudinal arm (3) to rotate about the pivot (112),
- said slide (4) comprises a through opening (40) which is in correspondence with the transversal through hole (102) of the longitudinal arm (3), said pivot (112) passes through the transversal through hole (102) of the longitudinal arm (3) and through said through opening (40) of the slide (4) constraining the movement of the slide (4).

2. Lawnmower (1) according to the claim 1, **characterized in that** said transversal through hole (102) of the longitudinal arm (3) is arranged at a longitudinal distance (D) measured along the longitudinal axis (L) starting from the lower end (301) of the longitudinal arm (3) and continuing towards the upper end (302) of the longitudinal arm (3), constraints of the movement of the slide (4) with respect to the pivot (112) are identified by transverse walls one of lower stop (401) and one of upper stop (402) of the through opening (40) of the slide (4).

3. Lawnmower (1) according to anyone of the claims 1 or 2, **characterized in that** said through opening (40) of the slide (4) has a longitudinal dimension (S) disposed along the longitudinal axis (L), said longitudinal dimension (S) of the through opening (40) of the slide (4) is comprised between a transverse wall of lower stop (401) and a transverse wall of upper stop (402) of the through opening (40) of the slide (4) and that the pivot (112) slides constrained by lateral transverse walls (405) of the through opening (40) of the slide (4) and between a transverse wall of lower stop (401) and a transverse wall of upper stop (402) of the through opening (40) of the slide (4).

4. Lawnmower (1) according to anyone of the claims 1-3, **characterized in that** said longitudinal arm (3) comprises a transverse protuberance (113) which is disposed along the transverse axis (T), that said slide (4) comprises a second through opening (400), said second through opening (400) serves as a slide for said transverse protuberance (113) of the longitudinal arm (3).

5. Lawnmower (1) according to claim 4, **characterized in that** said second through opening (400) of the slide (4) has a second longitudinal dimension (W) disposed along the longitudinal axis (L), said second longitudinal dimension (W) of the second through opening (400) of the slide (4) is comprised between a second transverse wall of lower stop (403) and a second transverse wall of upper stop (404) of the second through opening (400) of the slide (4) and that the transverse protuberance (113) of the longitudinal arm (3) allows the slide (4) to slide constrained by second lateral transverse walls (407) of the second through opening (400) of the slide (4) and between a second transverse wall of lower stop (403) and a second transverse wall of upper stop (404) of the second through opening (400) of the slide (4).

6. Lawnmower (1) according to anyone of the claims 1-5, **characterized in that** said slide (4) comprises a security pin (450), said security pin (450) extends outwardly in direction of the transverse axis (T), said bracket (110) comprises a cover (5) which closes the guide cavity (300), said cover (5) of the bracket (110) comprises a third transversal through hole (115) adapted to rotatably pivot the pivot (112), said cover (5) comprises a guide opening (50) adapted to serve as a guide for the security pin (450) of the slide (4).

7. Lawnmower (1) according to claim 6, **characterized in that** the guide opening (50) of the cover (5) is of a shape that traces the movement of the security pin (450) which moves together and integrally with the slide (4), the security pin (450) slides inside the transverse walls (501) of the guide opening (50) of the cover (5), said guide opening (50) of the cover (5) comprises a first portion of through opening (51) which constraints the movement of the security pin (450) during a phase of adjusting the height of the handle (32), said guide opening (50) of the cover (5) comprises a second portion of through opening (52) of circumference arch shape, which constraints the movement of the security pin (450) during the phase of tilting the handle (32), said first portion of through opening (51) is connected with said second portion of through opening (52) to form the guide opening (50) of the cover (5).

8. Lawnmower (1) according to claim 7, **characterized in that** said second portion of through opening (52) of the guide opening (50) constraints the movement of the handle (32) about the pivot (112) between a first transverse wall of stop (521) and a second transverse wall of stop (522) of the second portion of through opening (52) of the guide opening (50).

9. Lawnmower (1) according to anyone of the claims 1-8, **characterized in that** said adjustment control (6) comprises a cursor (7), a first through opening (71) of said cursor (7), a second through opening (77) of said cursor (7), a manageable knob (61) rotatably pivoted to said handle (32) by means of a second pivot (117), said manageable knob (61) is connected with said at least one cable (36), said manageable knob (61) is adapted to slide constrained within said second through opening (77), a second spring (75) which is adapted to pass from at least one stretched position to at least one compression position, said cursor (7) comprises a long side extending along a first axis (X), that said second through opening (77) has a long dimension extending along the first axis (X), said first through opening (71) comprises a first portion (711) which has a long dimension extending along the first axis (X) and a second portion (712) of circumference arch shape, said manageable knob (61) comprises a pin (118), said pin (118) is constrained by the second portion (712) of the first through opening (71) during the phase of adjusting the height of the handle (32) and during the phase of tilting the handle (32), said pin (118) is constrained by the first portion (711) of the first through opening (71) to keep the handle (32) in position during working operations of the lawnmower (1), said second spring (75) has an end fixed to the handle (32) and a second end fixed to said cursor (7), during the phase of adjusting the height of the handle (32) and during the phase of tilting the handle (32) said second spring (75) is kept in said at least one compression position and said manageable knob (61) is adapted to rotate about the second pivot (117) pulling or releasing said at least one cable (36) while the pin (118) is constrained by the second portion (712) of the first through opening (71), rotating said manageable knob (61) said at least one spring (220) passes from said at least one stretched position to said at least one compression position during a phase of adjusting the height of the handle (32) and during the phase of tilting the handle (32), during a phase of keeping the handle (32) in working position of the lawnmower (1), said second spring (75) passes to said at least one stretched position pulled by a second cable (37) of the lever system (360), the cursor (7) slides constrained by the second pivot (117) and the manageable knob (61) does not rotate about the second pivot (117).

10. Lawnmower (1) according to claim 9, **characterized in that** said adjustment control (6) comprises a security mechanism which removes operation consent to a motor during the phase of tilting the handle (32).

## Patentansprüche

1. Rasenmäher (1) mit einem Griff (32), einem Rahmen (2) und einer Vorrichtung (100) zum Einstellen der Höhe und der Neigung des Griffs (32) des Rasenmähers (1), wobei die Vorrichtung (100) dazu ausgebildet ist, die Höhe des Griffs (32) einzustellen sowie den Griff (32) in Richtung einer Vorderseite des Rasenmähers (1) zu neigen, wobei der Griff (32) des Rasenmähers (1) mindestens einen Längsarm (3) aufweist, wobei der Längsarm (3) an dem Rahmen (2) mittels eines Drehzapfens (112) drehbar angelenkt ist, wobei der Längsarm (3) eine Längsachse (L) definiert, wobei der Längsarm (3) eine in Querrichtung verlaufende Durchgangsöffnung (102) aufweist, durch die der Drehzapfen (112) quer durch den Längsarm (3) hindurchgeführt werden kann, wobei der Drehzapfen (112) eine Querachse (T) definiert, wobei die Vorrichtung (100) zum Einstellen der Höhe und zum Neigen des Griffs (32) aufweist: einen Führungshohlraum (300), der entlang der Längsachse (L) angeordnet und an einem unteren Ende (301) des Längsarms (3) in integraler Weise angebracht ist, einen Schlitten (4), der entlang der Längsachse (L) an dem Führungshohlraum (300) gleitend verschiebbar angebracht ist, eine Halterung (110), die an dem Rahmen (2) in integraler Weise angebracht ist, sowie mit einer Einstellsteuerung (6), wobei der Schlitten (4) der Vorrichtung (100) einen unteren Bereich (421) entlang der Längsachse (L) zu dem Rahmen (2) hin aufweist, wobei der untere Bereich (421) des Schlittens (4) mindestens einen Zahn (210) aufweist, wobei der Schlitten (4) einen oberen Bereich (423) entlang der Längsachse (L) in Richtung zu einem oberen Ende (302) des Längsarms (3) bereitstellt, wobei an dem oberen Bereich (423) des Schlittens (4) mindestens eine Feder (220) angebracht ist, wobei die mindestens eine Feder (220) an dem Führungshohlraum (300) angebracht ist, wobei die mindestens eine Feder (220) dazu ausgebildet ist, aus mindestens einer gedehnten Position, in der die Feder den Schlitten (4) in Richtung auf den Rahmen (2) drückt, in mindestens eine Kompressionsposition überzugehen, in der der Schlitten (4) die mindestens eine Feder (220) zusammendrückt, wobei die Halterung (110) eine Mehrzahl von Sitzen (122) aufweist, wobei jeder Sitz (122) der Mehrzahl von Sitzen (122) dazu ausgebildet ist, in der gedehnten Position der mindestens einen Feder (220) mit dem mindestens einen Zahn (210) zusammenzuwirken, wobei die Vorrichtung (100) die Einstellsteuerung (6) aufweist, die ein Hebelsystem (360) mit mindestens einem Seil (36) aufweist, das dazu ausgebildet ist, den Schlitten (4) nach oben zu ziehen, um die mindestens eine Feder (220) in der mindestens einen Kompressionsposition zusammenzudrücken, **dadurch gekennzeichnet, dass**
- das Hebelsystem (360) dazu ausgebildet ist, an dem mindestens einen Seil (36) zu ziehen, um die mindestens eine Feder (220) in eine Position höherer Kompression zu bringen,
- die Halterung (110) zwei Stufenhalter (123) aufweist, die außerhalb der Mehrzahl von Sitzen (122) angeordnet sind, wobei eine Tiefe (H) jedes Sitzes (122) kleiner ist als eine zweite Tiefe (Z) jedes Stufenhalters (123), wobei in der mindestens einen Kompressionsposition der mindestens einen Feder (220) während einer Phase des Einstellens der Höhe des Griffs (32) der mindestens eine Zahn (210) durch die beiden Stufenhalter (123) eingeengt ist, wobei in der Position höherer Kompression der mindestens einen Feder (220) während einer Phase des Neigens des Griffs (32) der mindestens eine Zahn (210) von den beiden Stufenhaltern (123) gelöst ist, so dass sich der Längsarm (3) um den Drehzapfen (112) drehen kann,
- der Schlitten (4) eine Durchgangsöffnung (40) aufweist, die der in Querrichtung verlaufenden Durchgangsöffnung (102) des Längsarms (3) korrespondierend vorgesehen ist, wobei sich der Drehzapfen (112) durch die in Querrichtung verlaufende Durchgangsöffnung (102) des Längsarms (3) und durch die Durchgangsöffnung (40) des Schlittens (4) hindurch erstreckt und die Bewegung des Schlittens (4) einengt.

2. Rasenmäher (1) nach Anspruch 1,
**dadurch gekennzeichnet, dass** die in Querrichtung verlaufende Durchgangsöffnung (102) des Längsarms (3) in einem Längsabstand (D), gemessen entlang der Längsachse (L) ausgehend vom unteren Ende (301) des Längsarms (3) und in Fortsetzung in Richtung auf das obere Ende (302) des Längsarms (3), angeordnet ist, wobei Einschränkungen der Bewegung des Schlittens (4) in Bezug auf den Drehzapfen (112) durch Querwände eines unteren Anschlags (401) sowie eines oberen Anschlags (402) der Durchgangsöffnung (40) des Schlittens (4) definiert sind.

3. Rasenmäher (1) nach einem der Ansprüche 1 oder 2,
**dadurch gekennzeichnet, dass** die Durchgangsöffnung (40) des Schlittens (4) eine Längsdimension (S) aufweist, die entlang der Längsachse (L) angeordnet ist, wobei die Längsdimension (S) der Durchgangsöffnung (40) des Schlittens (4) zwischen einer Querwand des unteren Anschlags (401) und einer Querwand des oberen Anschlags (402) der Durchgangsöffnung (40) des Schlittens (4) gebildet ist, und dass der Drehzapfen (112) eingeengt durch seitliche Querwände (405) der Durchgangsöffnung (40) des Schlittens (4) und zwischen einer Querwand des unteren Anschlags (401) und einer Querwand des oberen Anschlags (402) der Durchgangsöffnung (40) des Schlittens (4) verschiebbar ist.

4. Rasenmäher (1) nach einem der Ansprüche 1 bis 3,
**dadurch gekennzeichnet, dass** der Längsarm (3) einen Quervorsprung (113) aufweist, der entlang der Querachse (T) angeordnet ist, wobei der Schlitten (4) eine zweite Durchgangsöffnung (400) aufweist, wobei die zweite Durchgangsöffnung (400) als Gleiteinrichtung für den Quervorsprung (113) des Längsarms (3) dient.

5. Rasenmäher (1) nach Anspruch 4,
**dadurch gekennzeichnet, dass** die zweite Durchgangsöffnung (400) des Schlittens (4) eine zweite Längsdimension (W) aufweist, die entlang der Längsachse (L) angeordnet ist, wobei die zweite Längsdimension (W) der zweiten Durchgangsöffnung (400) des Schlittens (4) zwischen einer zweiten Querwand des unteren Anschlags (403) und einer zweiten Querwand des oberen Anschlags (404) der zweiten Durchgangsöffnung (400) des Schlittens (4) gebildet ist, und dass der Quervorsprung (113) des Längsarms (3) ermöglicht, dass der Schlitten (4) eingeengt durch zweite seitliche Querwände (407) der zweiten Durchgangsöffnung (400) des Schlittens (4) sowie zwischen einer zweiten Querwand des unteren Anschlags (403) und einer zweiten Querwand des oberen Anschlags (404) der zweiten Durchgangsöffnung (400) des Schlittens (4) verschiebbar ist.

6. Rasenmäher (1) nach einem der Ansprüche 1 bis 5,
**dadurch gekennzeichnet, dass** der Schlitten (4) einen Sicherheitsstift (450) aufweist, wobei sich der Sicherheitsstift (450) in Richtung der Querachse (T) nach außen erstreckt, wobei die Halterung (110) eine Abdeckung (5) aufweist, die den Führungshohlraum (300) verschließt, wobei die Abdeckung (5) der Halterung (110) eine dritte in Querrichtung verlaufende Durchgangsöffnung (115) aufweist, die zum drehbaren Lagern des Drehzapfens (112) ausgebildet ist, wobei die Abdeckung (5) eine Führungsöffnung (50) aufweist, die dazu ausgebildet ist, als Führung für den Sicherheitsstift (450) des Schlittens (4) zu dienen.

7. Rasenmäher (1) nach Anspruch 6,
**dadurch gekennzeichnet, dass** die Führungsöffnung (50) des Deckels (5) eine Formgebung aufweist, die der Bewegung des Sicherheitsstiftes (450) folgt, der sich zusammen und in integraler Weise mit dem Schlitten (4) bewegt, wobei der Sicherheitsstift (450) innerhalb der Querwände (501) der Führungsöffnung (50) der Abdeckung (5) verschiebbar ist, wobei die Führungsöffnung (50) der Abdeckung (5) einen ersten Bereich einer Durchgangsöffnung (51) aufweist, der die Bewegung des Sicherheitsstifts (450) während einer Phase der Einstellung der Höhe des Griffs (32) einengt, wobei die Führungsöffnung (50) der Abdeckung (5) einen zweiten Bereich der Durchgangsöffnung (52) mit Kreisbogenform aufweist, der die Bewegung des Sicherheitsstifts (450) während der Phase des Neigens des Griffs (32) einengt, wobei der erste Bereich der Durchgangsöffnung (51) mit dem zweiten Bereich der Durchgangsöffnung (52) verbunden ist, um die Führungsöffnung (50) der Abdeckung (5) zu bilden.

8. Rasenmäher (1) nach Anspruch 7,
**dadurch gekennzeichnet, dass** der zweite Bereich der Durchgangsöffnung (52) der Führungsöffnung (50) die Bewegung des Griffs (32) um den Drehzapfen (112) zwischen einer ersten Querwand des Anschlags (521) und einer zweiten Querwand des Anschlags (522) des zweiten Bereichs der Durchgangsöffnung (52) der Führungsöffnung (50) einengt.

9. Rasenmäher (1) nach einem der Ansprüche 1 bis 8,
**dadurch gekennzeichnet, dass** die Einstellsteuerung (6) aufweist: ein Gleitstück (7), eine erste Durchgangsöffnung (71) des Gleitstücks (7), eine zweite Durchgangsöffnung (77) des Gleitstücks (7), einen Betätigungsknopf (61), der an dem Griff (32) mittels eines zweiten Drehzapfens (117) drehbar angelenkt ist, wobei der Betätigungsknopf (61) mit dem mindestens einen Seil (36) verbunden ist, wobei der Betätigungsknopf (61) dazu ausgebildet ist, eine Gleitbewegung eingeengt innerhalb der zweiten Durchgangsöffnung (77) auszuführen, eine zweite Feder (75), die dazu ausgebildet ist, von mindestens einer gedehnten Position in mindestens eine Kompressionsposition überzugehen, wobei das Gleitstück (7) eine lange Seite aufweist, die sich entlang einer ersten Achse (X) erstreckt, wobei die zweite Durchgangsöffnung (77) eine Längsdimension aufweist, die sich entlang der ersten Achse (X) erstreckt, wobei die erste Durchgangsöffnung (71) einen ersten Bereich (711) aufweist, der eine entlang der ersten Achse (X) verlaufende Längsdimension besitzt, und einen zweiten Bereich (712) mit Kreisbogenform aufweist, wobei der Betätigungsknopf (61) einen Stift (118) aufweist, wobei der Stift (118) während der Phase der Einstellung der Höhe des Griffs (32) und während der Phase des Neigens des Griffs (32) durch den zweiten Bereich (712) der ersten Durchgangsöffnung (71) eingeengt ist, wobei der Stift (118) durch den ersten Bereich (711) der ersten Durchgangsöffnung (71) eingeengt wird, um den Griff (32) während Arbeitsvorgängen des Rasenmähers (1) in Position zu halten, wobei die zweite Feder (75) ein an dem Griff (32) festgelegtes Ende (75) und ein an dem Gleitstück (7) festgelegtes zweites Ende aufweist, wobei während der Phase der Einstellung der Höhe des Griffs (32) und während der Phase des Neigens des Griffs (32) die zweite Feder (75) in der mindestens einen Kompressionsposition gehalten wird und der Betätigungsknopf (61) sich um den zweiten Drehzapfen (117) drehen kann, wobei er an dem mindestens einen Seil (36) zieht oder dieses freigibt, während der Stift (118) durch den zweiten Bereich (712) der ersten Durchgangsöffnung (71) eingeengt wird, wobei bei Rotation des Betätigungsknopfes (61) die mindestens eine Feder (220) während einer Phase des Einstellens der Höhe des Griffs (32) und während der Phase des Neigens des Griffs (32) von der mindestens einen gedehnten Position in die mindestens eine Kompressionsposition übergeht und die zweite Feder (75) während einer Phase des Haltens des Griffs (32) in der Arbeitsposition des Rasenmähers (1) in die mindestens eine gedehnte Position übergeht, wobei sie von einem zweiten Seil (37) des Hebelsystems (360) gezogen wird, wobei das Gleitstück (7) eingeengt durch den zweiten Drehzapfen (117) verschoben wird und sich der Betätigungsknopf (61) nicht um den zweiten Drehzapfen (117) dreht.

10. Rasenmäher (1) nach Anspruch 9,
**dadurch gekennzeichnet, dass** die Einstellsteuerung (6) einen Sicherheitsmechanismus aufweist, der während der Phase des Neigens des Griffs (32) eine Zustimmung für den Betrieb eines Motors aufhebt.

## Revendications

1. Tondeuse à gazon (1) comprenant une poignée (32), un bâti (2) et un appareil pour ajuster la hauteur et l'inclinaison (100) de la poignée (32) de la tondeuse à gazon (1), ledit appareil (100) est adapté pour ajuster la hauteur de ladite poignée (32) et est adapté pour incliner ladite poignée (32) vers une partie avant de la tondeuse à gazon (1), ladite poignée (32) de la tondeuse à gazon (1) comprenant au moins un bras longitudinal (3), ledit bras longitudinal (3) est pivoté, en rotation, sur ledit bâti (2) au moyen d'un pivot (112), ledit bras longitudinal (3) identifie un axe longitudinal (L), ledit bras longitudinal (3) comprend un trou débouchant transversal (102) qui est adapté pour passer transversalement par ledit pivot (112) à travers le bras longitudinal (3), ledit pivot (112) identifie un axe transversal (T), ledit appareil pour ajuster la hauteur et pour incliner (100) la poignée (32) comprend une cavité de guidage (300) disposée le long de l'axe longitudinal (L) et montée, de manière solidaire, avec une extrémité inférieure (301) du bras longitudinal (3), une glissière (4) qui est montée, de manière coulissante, le long de l'axe longitudinal (L) avec ladite cavité de guidage (300), un support (110) qui est monté, de manière solidaire, avec ledit bâti (2) et avec une commande d'ajustement (6), ladite glissière (4) de l'appareil (100) comprend une partie inférieure (421) le long de l'axe longitudinal (L) vers le bâti (2), ladite partie inférieure (421) de la glissière (4) comprenant au moins une dent (210), ladite glissière (4) fournit une partie supérieure (423) le long de l'axe longitudinal (L) vers une extrémité supérieure (302) du bras longitudinal (3), ladite partie supérieure (423) de la glissière (4) permet de monter au moins un ressort (220), ledit au moins un ressort (220) étant monté avec ladite cavité de guidage (300), ledit au moins un ressort (220) est adapté pour passer d'au moins une position étirée dans laquelle le ressort pousse la glissière (4) vers le bâti (2) à au moins une position de compression, dans laquelle la glissière (4) comprime ledit au moins un ressort (220), ledit support (110) comprend une pluralité de sièges (122), chaque siège (122) de ladite pluralité de sièges (122) est adapté pour mettre en prise ladite au moins une dent (210) dans ladite position étirée dudit au moins un ressort (220), ledit appareil (100) comprend ladite commande d'ajustement (6) qui comprend un système de levier (360) comprenant au moins un câble (36) qui est adapté pour remonter ladite glissière (4) afin de comprimer ledit au moins un ressort (220) dans ladite au moins une position de compression,
**caractérisée en ce que** :
- ledit système de levier (360) est adapté pour tirer ledit au moins un câble (36) pour faire passer ledit au moins un ressort (220) dans une position de plus forte compression,
- ledit support (110) comprend deux dispositifs de retenue de gradin (123) qui sont agencés à l'extérieur de la pluralité de sièges (122), une profondeur (H) de chaque siège (122) est inférieure à une seconde profondeur (Z) de chaque dispositif de retenue de gradin (123), dans ladite au moins une position de compression dudit au moins un ressort (220) pendant une phase d'ajustement de la hauteur de la poignée (32), ladite au moins une dent (210) est contrainte par lesdits deux dispositifs de retenue de gradin (123), dans ladite position de plus forte compression dudit au moins un ressort (220) pendant une phase d'inclinaison de la poignée (32), ladite au moins une dent (210) est dégagée desdits deux dispositifs de retenue de gradin (123) permettant audit bras longitudinal (3) de tourner autour du pivot (112),
- ladite glissière (4) comprend une ouverture débouchante (40) qui est en correspondance du trou débouchant transversal (102) du bras longitudinal (3), ledit pivot (112) passe à travers le trou débouchant transversal (102) du bras longitudinal (3) et à travers ladite ouverture débouchante (40) de ladite glissière (4) retenant le mouvement de la glissière (4).

2. Tondeuse à gazon (1) selon la revendication 1, **caractérisée en ce que** ledit trou débouchant transversal (102) du bras longitudinal (3) est agencé à une distance longitudinale (D) mesurée le long de l'axe longitudinal (L) à partir de l'extrémité intérieure (301) du bras longitudinal (3) et continuant vers l'extrémité supérieure (302) du bras longitudinal (3), les contraintes du mouvement de la glissière (4) par rapport au pivot (112) sont identifiées par des parois transversales, une de la butée inférieure (401) et une de la butée supérieure (402) de l'ouverture débouchante (40) de la glissière (4).

3. Tondeuse à gazon (1) selon l'une quelconque des revendications 1 ou 2,
**caractérisée en ce que** ladite ouverture débouchante (40) de la glissière (4) a une dimensions longitudinale (S) disposée le long de l'axe longitudinal (L), ladite dimension longitudinale (S) de l'ouverture débouchante (40) de la glissière (4) est comprise entre une paroi transversale de la butée inférieure (401) et une paroi transversale de la butée supérieure (402) de l'ouverture débouchante (40) de la glissière (4) et **en ce que** le pivot (112) coulisse, contraint par les parois transversales latérales (405) de l'ouverture débouchante (40) de la glissière (4) et entre une paroi transversale de la butée inférieure (401) et une paroi transversale de la butée supérieure (402) de l'ouverture débouchante (40) de la glissière (4) .

4. Tondeuse à gazon (1) selon l'une quelconque des revendications 1 à 3, **caractérisée en ce que** ledit bras longitudinal (3) comprend une protubérance transversale (113) qui est disposée le long de l'axe transversal (T), **en ce que** ladite glissière (4) comprend une seconde ouverture débouchante (400), ladite seconde ouverture débouchante (400) sert de glissière pour ladite protubérance transversale (113) du bras longitudinal (3).

5. Tondeuse à gazon (1) selon la revendication 4, **caractérisée en ce que** ladite seconde ouverture débouchante (400) de la glissière (4) a une seconde dimension longitudinale (W) disposée le long de l'axe longitudinal (L), ladite seconde dimension longitudinale (W) de la seconde ouverture débouchante (400) de la glissière (4) est comprise entre une seconde paroi transversale de la butée inférieure (403) et une seconde paroi transversale de la butée supérieure (404) de la seconde ouverture débouchante (400) de la glissière (4) et **en ce que** la protubérance transversale (113) du bras longitudinal (3) permet à la glissière (4) de coulisser, contrainte par les secondes parois transversales latérales (407) de la seconde ouverture débouchante (400) de la glissière (4) et entre une seconde paroi transversale de la butée inférieure (403) et une seconde paroi transversale de la butée supérieure (404) de la seconde ouverture débouchante (400) de la glissière (4).

6. Tondeuse à gazon (1) selon l'une quelconque des revendications 1 à 5, **caractérisée en ce que** ladite glissière (4) comprend une broche de sécurité (450), ladite broche de sécurité (450) s'étend vers l'extérieur dans la direction de l'axe transversal (T),
ledit support (110) comprend un couvercle (5) qui ferme la cavité de guidage (300), ledit couvercle (5) du support (110) comprend un troisième trou débouchant transversal (115) adapté pour faire pivoter, en rotation, le pivot (112), ledit couvercle (5) comprend une ouverture de guidage (50) adaptée pour servir de guide pour la broche de sécurité (450) de la glissière (4).

7. Tondeuse à gazon (1) selon la revendication 6, **caractérisée en ce que** l'ouverture de guidage (50) du couvercle (5) a une forme qui suit le mouvement de la broche de sécurité (450) qui se déplace conjointement et de manière solidaire avec la glissière (4), la broche de sécurité (450) coulisse à l'intérieur des parois latérales (501) de l'ouverture de guidage (50) du couvercle (5), ladite ouverture de guidage (50) du couvercle (5) comprend une première partie de l'ouverture débouchante (51) qui contraint le mouvement de la broche de sécurité (450) pendant une phase d'ajustement de hauteur de la poignée (32), ladite ouverture de guidage (50) du couvercle (5) comprend une seconde partie de l'ouverture débouchante (52) ayant une forme d'arc circonférentielle, qui contraint le mouvement de la broche de sécurité (450) pendant la phase d'inclinaison de la poignée (32), ladite première partie de l'ouverture débouchante (51) est raccordée avec la seconde partie de l'ouverture débouchante (52) pour former l'ouverture de guidage (50) du couvercle (5).

8. Tondeuse à gazon (1) selon la revendication 7, **caractérisée en ce que** ladite seconde partie de l'ouverture débouchante (52) de l'ouverture de guidage (50) contraint le mouvement de la poignée (32) autour du pivot (112) entre une première paroi transversale de butée (521) et une seconde paroi transversale de butée (522) de la seconde partie de l'ouverture débouchante (52) de l'ouverture de guidage (50).

9. Tondeuse à gazon (1) selon l'une quelconque des revendications 1 à 8, **caractérisée en ce que** ladite commande d'ajustement (6) comprend un curseur (7), une première ouverture débouchante (71) dudit curseur (7), une seconde ouverture débouchante (77) dudit curseur (7), un bouton gérable (61) pivoté, en rotation, sur ladite poignée (32) au moyen d'un second pivot (117), ledit bouton gérable (61) est raccordé avec ledit au moins un câble (36), ledit bouton gérable (61) est adapté pour coulisser, contraint à l'intérieur de ladite seconde ouverture débouchante (77), un second ressort (75) qui est adapté pour passer d'au moins une position étirée à au moins une position de compression, ledit curseur (7) comprend un côté long s'étendant le long d'un premier axe (X), **en ce que** ladite seconde ouverture débouchante (77) a une dimension longue s'étendant le long du premier axe (X), ladite première ouverture débouchante (71) comprend une première partie (711) qui a une dimension longue s'étendant le long du premier axe (X) et une seconde partie (712) en forme d'arc circonférentielle, ledit bouton gérable (61) comprend une broche (118), ladite broche (118) est contrainte par la seconde partie (712) de la première ouverture débouchante (71) pendant la phase d'ajustement de la hauteur de la poignée (32) et pendant la phase d'inclinaison de la poignée (32), ladite broche (118) est contrainte par la première partie (711) de la première ouverture débouchante (71) pour maintenir la poignée (32) en position pendant les opérations de travail de la tondeuse à gazon (1), ledit second ressort (75) a une extrémité fixée à la poignée (32) et une seconde extrémité fixée audit curseur (7), pendant la phase d'ajustement de la hauteur de la poignée (32) et pendant la phase d'inclinaison de la poignée (32), ledit second ressort (75) est maintenu dans ladite au moins une position de compression et ledit bouton gérable (61) est adapté pour tourner autour du second pivot (117) en tirant ou en relâchant ledit au moins un câble (36), alors que la broche (118) est contrainte par ladite seconde partie (712) de la première ouverture débouchante (71), en faisant tourner ledit bouton gérable (61), ledit au moins un ressort (220) passe de ladite au moins une position étirée à ladite au moins une position de compression pendant une phase d'ajustement de la hauteur de la poignée (32) et pendant la phase de l'inclinaison de la poignée (32), pendant une phase de maintien de la poignée (32) dans la position de travail de la tondeuse à gazon (1), ledit second ressort (75) passe de ladite au moins une position étirée, tirée par un second câble (37) du système de levier (360), le curseur (7) coulisse, contraint par le second pivot (117) et le bouton gérable (61) ne tourne pas autour du second pivot (117).

10. Tondeuse à gazon (1) selon la revendication 9, **caractérisée en ce que** ladite commande d'ajustement (6) comprend un mécanisme de sécurité qui supprime l'autorisation de fonctionnement d'un moteur pendant la phase d'inclinaison de la poignée (32).
